# EUROPÄISCHE PATENTSCHRIFT

(11) **EP 0 613 587 B1**
(45) Veröffentlichungstag und Bekanntmachung des Hinweises auf die Patenterteilung: **17.04.1996**
(21) Anmeldenummer: 92923594.3
(22) Anmeldetag: 26.11.1992
(51) Int. Cl.: H01M 6/52

(54) **VERFAHREN ZUR AUFBEREITUNG VON ALTBATTERIEN**
METHOD OF PROCESSING USED BATTERIES
PROCEDE DE TRAITEMENT DE PILES USAGEES

(30) Priorität: 27.11.1991 AT 2368/91
(43) Veröffentlichungstag der Anmeldung: 07.09.1994
(73) Patentinhaber: RAMSKOGLER, Kurt, A-2201 Gerasdorf (AT)
(72) Erfinder: RAMSKOGLER, Kurt, A-2201 Gerasdorf (AT); GIAHI, Chalostori, Mosstafa, A-1060 Wien (AT)
(74) Vertreter: Pfeifer, Otto, Dipl.-Ing.
(86) Internationale Anmeldenummer: AT9200155
(87) Internationale Veröffentlichungsnummer: WO9311573

(56) Entgegenhaltungen:
- EP-A- 0 247 023
- CH-A- 676 169
- CH-A- 676 896
- GB-A- 2 185 348
- PATENT ABSTRACTS OF JAPAN, vol. 11, no. 143 (E-504), abstract of JP- 61-281467

## Beschreibung

Die Erfindung bezieht sich auf ein Verfahren zur Aufbereitung von Altbatterien, insbesondere von Zink-Kohle- und Alkali-Mangan-Batterien, zur Wiedergewinnung darin vorhandener verwertbarer oder umweltrelevanter Stoffe.

Primärbatterien finden in zahlreichen netzunabhängigen Kleingeräten als runde, prismatische Zellen und als Knopfzellen in großer Stückzahl Verwendung.

Der entscheidende Durchbruch zu modernen, transportablen Stromquellen war zweifellos die Gestaltung der Zinkanoden zum Zellengefäß und der Einsatz von Braunstein als positive Elektrode, sowie die Idee, an Stelle eines flüssigen einen festen, in der Elektrolytlösung praktisch unlöslichen Depolarisator (Braunstein) zu verwenden. Als Elektrolyte werden je nach Batteriesystem Salmiak, gegebenenfalls mit Zinkchloridzusatz, oder verdünnte Kalilauge in Batterien mit Zinkanode, verwendet. Zur Unterdrückung der Selbstentladung werden die Zinkanoden mit Quecksilbersalzen amalgiert. Beimengungen wie Kupfer und Eisen sind nur in Spuren zulässig, während ein gewisser Prozentsatz von Blei und Cadmium in genau abgestimmten Größenverhältnissen zur Verbesserung der Zinkqualität beitragen kann.

Primärbatterien sind nur für einmaligen Gebrauch bestimmt. Nach ihrer Erschöpfung wurden sie bis vor einiger Zeit ausschließlich mit dem normalen Hausmüll deponiert oder verbrannt. Dies verursachte jedoch Umweltverunreinigungen. In neuerer Zeit werden diese Batterien teilweise gesondert gesammelt. Ihre Vernichtung in umweltfreundlicher Weise ergibt jedoch große Schwierigkeiten.

Schon seit einigen Jahren bemüht sich die industrielle Batterieproduktion, den Metallanteil der alten Batterien zurückzugewinnen.

Ausschlaggebend dafür waren zunächst jedoch nicht Umweltschutzüberlegungen, sondern einfach ökonomische Gründe, d.h. die Wiedergewinnung der Rohstoffe, wie Zink, Ammonium und Mangan.

Dennoch ist das Recycling ein wichtiger Beitrag zum Umweltschutz, da damit wie erwähnt, ungeordnete, aber auch geordnete Ablagerungen von Gefahrenstoffen bzw. Wertstoffen aus Altbatterien vermieden werden.

Aus der Technik sind verschiedene Verfahren zur Materialrückgewinnung aus unbrauchbaren Batterien bekannt.

So die FR-PS Nr. 1 112 969. Darin ist ein Verfahren zur Rückgewinnung der metallischen Komponenten aus gebrauchten Trockenzellen beschrieben, wobei die Batterien im Verlauf einer Vorverkohlung zerstört und die erhaltenen chlorierten Verbindungen teilweise zersetzt werden. Die Metallkomponenten des unverbrannten Anteils werden mit kohlenstoffhältigen Materialien vermischt und agglomeriert. Die Agglomerate werden sodann einer Reduktions- und schließlich einer Oxidationsbehandlung unterworfen, woraus eine Manganverbindung und Zinkoxyd resultieren. Zinkoxyd wird aus den Verbrennungsgasen der Oxidationsbehandlung abgeschieden.Die nach der Vorverkohlung noch verbliebenen chlorierten Verbindungen werden während der Reduktionsbehandlung zerstört und als gasförmige Proodukte abgeführt.

Nach der indischen PS 127 714 werden die Zellen geöffnet und die Reaktionsprodukte ausgeräumt. Das Zink wird mit heißem Wasser gewaschen und unter Zugabe von Kohlenstoff bei 800°C geschmolzen. Dieses Verfahren ist sehr arbeitsaufwendig, außerdem wird kein Mangan zurückgewonnen.

Entsprechend der japanischen PS 7 560 414 werden die zerkleinerten Elemente in heißer Salzsäure aufgelöst und niederwertiges Mangan in Gegenwart von Wasserstoffperoxid erhalten. Nach der japanischen PS 74 106 419 wird die Salzsäurelösung mit Ammoniak bis zu einem pH-Wert von 5 eingestellt und Eisen-III-hydroxid ausgefällt. Während nach dieser PS in der Vorstufe die Batterien zerkleinert, einer Naßsiebung und Eisenabtrennung unterzogen werden, werden nach der japanischen PS 75 01 094 die verbrauchten Trockenzellen 8 Stunden bei 750°C in Gegenwart von Luft geröstet, und nach dem Zerkleinern bis zu einem feinen Puder in 20%iger Salzsäure gelöst.

Aus der österreichischen PS 381 808 ist ein Verfahren zur Rückgewinnung von Zink und Mangan aus entladenen Zink-Kohle-Manganoxidbatterien bekannt. Danach wird der Batterieschrott, gegebenenfalls nach vorheriger Auslaugung, mit festen, kohlenstoffhältigen Reduktionsmitteln und Eisenträger als Zuschlagstoffe in einem Reduktionsgefäß bei 1.400 - 1.600°C eingeschmolzen, wobei die in den dabei entstehenden Reaktionsgasen enthaltenen Zinkverbindungen oder metallisches Zink sowie Ammoniumchlorid unter Abkühlung der Gase gesammelt werden und Mangan als zinkfreies Ferromangan gewonnen wird.

In der CH-PS 670 015 wird ein Verfahren zur Entsorgung gebrauchter Primärbatterien und zur Rückgewinnung von darin enthaltenen Rohstoffen beschrieben. Dieses Verfahren umfaßt einen zweistufigen, thermischen Zersetzungsprozeß. Der Batterieschrott wird zur Vorbereitung des thermischen Zersetzungsprozesses mechanisch zerkleinert, mit Wasser befeuchtet und der pH-Wert der feuchten Batteriemasse wird auf einen Wert von über 12 eingestellt. Ammoniak und Wasser werden im Temperaturbereich von 20 - 150°C abdestilliert. In der zweiten Stufe des Zersetzungsprozesses wird die Batteriemasse weiter erhitzt, und im Temperaturbereich von 350 - 550°C Quecksilber abdestilliert. Nach erfolgter Abkühlung wird der von Quecksilber vollständig befreite Batterieschrott nochmals mechanisch zerkleinert. Aus dem Schrott können hierauf Rohstoffe, meistens in Form von Oxiden, nach Teilchengrößen, spezifischem Gewicht und magnetischem Verhalten aussortiert werden.

In der CH-PS 676 896 wird ein Entsorgungs- und Materialrückgewinnungsverfahren für unsortiertes Sammelgut aus gebrauchten Alkali-Mangan- und Zink-Kohle- Batterien, das auch kleine Mengen weiterer Batterietypen enthalten kann, beschrieben. Nach der Batteriezerkleinerung werden zunächst die Elektrolytsalze aus der Mischung mit Wasser herausgelöst und aus dem Waschwasser wird dann durch eine Zugabe von stark alkalischen Stoffen gasförmiges Ammoniak durch eine Temperaturerhöhung verdrängt. Dadurch wird die Löslichkeit von Zink, Cadmium, Quecksilber, Kupfer, Mangan und von weiteren Metallen, die Ammonkomplexe bilden, erniedrigt und sie werden aus der Lösung ausgeschieden. Die ausgefällten Hydroxide oder Carbonate dieser Metalle bzw. Quecksilberoxyd werden aus dem Abwasser entfernt und können zusammen mit der Feinfraktion aufbereitet werden. Die unlöslichen Bestandteile der Batterien werden durch Sieben in eine Grobfraktion und eine Feinfraktion getrennt. Aus der Grobfraktion werden die leichten Kunststoff- und Papierteile nach ihrer Dichte, Eisenschrott durch Magnetscheiden aussortiert. Die pulvrige Feinfraktion wird einer thermischen Behandlung unterworfen. Dabei wird das Quecksilber herausdestilliert. Aus dem Rückstand nach der thermischen Behandlung wird dann Zink mit einer wäßrigen Lösung herausgelöst. Dadurch wird eine Trennung zwischen Mangan und Zink erreicht, die eine Weiterverarbeitung der Feinfraktion zu verkäuflichen Produkten ermöglicht.

Alle diese Verfahren zur Aufbereitung von Kleinbatterien sind mit verschiedenen Nachteilen behaftet. So werden bei den meisten bekannten Verfahren die Batterien in einem Ofen bei höheren Temperaturen einem thermischen Verfahren unterworfen. Bei der Behandlung derart komplexer Stoffgemische, wie sie Sondermüll, hier insbesondere Altbatterieabfall darstellen, durch Erhitzen auf bis zu Über 1.000°C ist die Bildung weiterer unerwünschter Stoffe oder Stoffgemische mit möglicherweise umweltrelevanten Eigenschaften nicht auszuschließen.

Es finden sich jedoch keine Angaben über die Zusammensetzung der entstehenden Abgase, sowie über die chemischen Reaktionen im Ofen und deren Produkte infolge der thermischen Behandlung solcher komplexen Systeme.

Die bekannt gewordenen Verfahren sind aber darüberhinaus erst bei der Errichtung größerer Anlagen sinnvoll. Technisch machbar ist heute vieles, was jedoch tatsächlich zu verwirklichen ist, hängt ganz entschieden von der Wirtschaftlichkeit ab.

Der Erfindung liegt daher die Aufgabe zugrunde, ein Verfahren zur Aufbereitung von Altbatterien, insbesondere von Zink-Kohle- und Alkali-Mangan-Batterien, zur Wiedergewinnung darin vorhandener verwertbarer oder unweltrelevanter Stoffe zu schaffen, welches die Nachteile der bekannten Verfahren überwindet und es ermöglicht, die in den unbrauchbaren Zellen vorhandenen chemischen Elemente, wie beispielsweise Zink und Mangan, sowie andere darin vorliegende Stoffe, oder deren Verbindungen, für die es eine technische Verwendung gibt, in einer wirtschaftlichen, praxisgerechten Form wiederzugewinnen. Gleichzeitig soll eine vollständige und sichere Form der Wiedergewinnung umweltrelevanter Stoffe ermöglicht werden. Das Verfahren soll darüberhinaus eine wirtschaftliche Aufarbeitung von Altbatterien, auch im kleineren Maßstab, ermöglichen.

Diese Aufgabe wird erfindungsgemäß durch ein Verfahren gemäß Anspruch 1 gelöst.

Das Verfahren wird im folgenden näher veranschaulicht.

Auf einem Vorsieb werden die Fremdanteile des Batterieschrotts, die etwa 1 % ausmachen, aussortiert und einer entsprechenden Entsorgung, je nach Beschaffenheit des Fremdmaterials, zugeführt. Diese kann die Deponierung, die Verbrennung oder eine sonstige Aufarbeitung sein.

Des weiteren werden auf dem Sieb händisch oder nach Möglichkeit magnetisch die Nickel-Cadmiumbatterien sowie quecksilberhältige Knopfzellen, die als recyclingfähig gekennzeichnet sind (Menge ungefähr 6 - 7%), aussortiert. Somit verbleiben für die Weiterverarbeitung lediglich Zink-Kohle- und Alkali-Manganbatterien. Die aussortierte Menge von ca. 92% wird nun einem Zerkleinerungsverfahren unterworfen.

Der Batterieschrott wird nach der mechanischen Zerkleinerung in einer abgeschlossenen Siebanlage zuerst in zwei Fraktionen zerlegt, in eine feine Fraktion (Korngröße - 250 µm) und in eine gröbere Fraktion.

Die feine Fraktion, die hauptsächlich aus Kohle, Zinkstaub und Zinkverbindungen, sowie Manganverbindungen und Ammoniumverbindungen besteht, macht 60% vom gesamten Batterieschrott aus und hat etwa folgende Zusammensetzung:

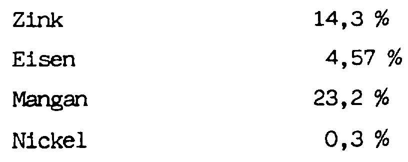

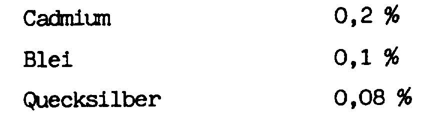

Der Rest besteht aus Wasser und anderen chemischen Verbindungen.

Die gröbere Fraktion, die neben Eisen noch metallisches Zink, geringe Mengen an Manganverbindungen und andere anorganische Salze, sowie organische Bestandteile wie Papier und Kunststoffe enthält, wird auf einen Magnetabscheider gebracht, um das Eisen abzutrennen. Die grobkörnige Fraktion besteht aus etwa 25% nichtmagnetischem und etwa 15% magnetischem Anteil (bezogen auf den gesamten Batterieschrott).

Die Zusammensetzung des nichtmagnetischen Anteils beträgt etwa:

| | |
|---|---|
| Zink | 37 % |
| Mangan | 3 % |
| Eisen | 12 % |
| Nickel | 5,7 % |
| Blei | 1,8 % |
| Cadmium | 2,0 % |
| Kupfer | 0,35 % |
| Quecksilber | 0,01 % |

Der Rest besteht aus Wasser und anorganischen Verbindungen, sowie Kunststoffen und Papier.

Die magnetische Fraktion hat nach dem Waschen etwa folgende Zusammensetzung:

| | |
|---|---|
| Eisen | 70,5 % |
| Zink | 1,9 % |
| Nickel | 0,62 % |
| Quecksilber | 0,04 % |

Diese magnetische Fraktion kann nach dem Auswaschen mit Wasser beispielsweise in die Stahlindustrie zugeführt werden.

Die nichtmagnetische, grobkörnige Fraktion wird in gleicher Weise wie die feinkörnige Siebfraktion, jedoch aufgrund der unterschiedlichen Reaktionszeiten getrennt, behandelt.

Die gleich nach dem Sieben im Wasser aufgefangene Feinfraktion, um eine Staubbildung zu vermeiden, wird in eine Zinkrecyclinganlage gepumpt. In der Anlage wird das gesamte Zink, sowie Zinkverbindungen, als Zinkat in Lösung gebracht. Zu diesem Zweck wird erfindungsgemäß der pH-Wert mit Natronlauge über 12 eingestellt. Die Einstellung dieses pH-Wertes bewirkt darüberhinaus bekanntlich, daß das in den Zink-Kohlebatterien enthaltene Ammoniumchlorid in Ammoniumhydroxid umgewandelt wird.

Nachdem die Auflösung des Zinkes in Trockenbatterien gemäß der Erfindung eine exotherme Reaktion beinhaltet, steigt die Temperatur des Reaktionsgemisches um ungefähr 10°C. Diese Temperaturerhöhung begünstigt das Verdampfen des Ammoniaks, welcher in einem Ammoniakwäscher auf 30% aufkonzentriert wird. Die gewonnene Ammoniumhydroxidlösung kann der chemischen Industrie zugeführt werden.

Nach der Reaktionszeit, welche je nach Fraktion ungefähr 1 bis 2 Stunden beträgt, aber jedenfalls ausreichend lang sein muß, um das gesamte ionische und metallische Zink in Zinkat zu überführen, wird das Rührwerk der Anlage abgeschaltet, bei der groben Fraktion werden Kunststoffe, Papiere, Vergußmasse und andere aufschwimmende, hauptsächlich organische Anteile abgeschöpft und der weiteren Reinigung zugeführt. Dieser Anteil der grobkörnigen Fraktion ist nach der Reinigung praktisch frei von Schadstoffen und kann nach dem geeigneten Verfestigungsverfahren für die Deponierung konditioniert werden.

Das verbleibende Reaktionsgemisch, das die schweren, wasserunlöslichen Komponenten, wie Manganverbindungen, Kohle, Metalle und Metallverbindungen und das im stark basischen Bereich gelöste Zink beinhaltet, wird abfiltriert. Die flüssige Phase, die auch nach dem Abfiltrieren noch kolloid gelöste Mangansauerstoffverbindungen beinhaltet, wird über einem Sandfilter gereinigt. Aus dieser Phase wird durch die pH-Einstellung Zinkhydroxid ausgefällt. Erfahrungsgemäß hat sich pH 11 sehr bewährt, da bei diesem pH-Wert Zinkhydroxid aus sehr leicht filtrierbaren Kristallen besteht. Das erhaltene Zinkhydroxid, welches noch 0,2 Gew.-% Blei und 0,02 Gew.-% Mangan (bezogen auf die Trockensubstanz) enthält, wird für die weitere Verwertung entsprechend behandelt.

Zum Beispiel wird für die Zinkgewinnung, sowie für die galvanotechnische Verzinkerei das Zinkhydroxid in Schwefelsäure als Sulfat gelöst, wobei Blei als wasserunlösliches Bleisulfat abzutrennen ist.

Die erfindungsgemäße alkalische Auflösung des Zinkes aus Trockenbatterien und die dabei resultierende Ammoniakentfernung hat ferner den Vorteil, daß sich die giftigen Metallkomponenten wie Cadmium, Mangan, Nickel und Kupfer sowie leicht flüchtige Quecksilberchloride in Metalloxide umwandeln und dadurch die Umweltbelastung durch Quecksilber, sowie durch andere Metalle und deren Verbindungen reduziert wird.

Der im alkalischen Bereich unlösliche Anteil von beiden Fraktionen wird nun gemeinsam der Weiterverarbeitung zugeführt.

In einem abgeschlossenen Reaktionsbehälter wird der Schlamm unter Einhaltung der Reaktionstemperatur von unter 15°C mit Wasser aufgeschlämmt und mit konzentrierter Salzsäure wird ein pH-Wert von 1 eingestellt. Bei diesem pH-Wert werden alle in Trockenbatterien vorkommenden Metalle, sowie Metallverbindungen gelöst. Die Aktivkohle, die sich auf der Oberfläche des Reaktionsgemisches befindet, wird abgeschöpft und ausgewaschen und das Waschwasser kann gegebenenfalls mit Natronlauge auf den für eine Sulfidbehandlung geeigneten pH-Wert eingestellt werden.

Die Praxis hat gezeigt, daß diese Kohle nach zweimal Waschen frei von Schwermetallionen ist. Eventuell kann sie nach dem Trocknen fUr die Luftfilteranlagen in der Industrie eingesetzt werden. Eine Verwendung in der Batterieindustrie ist ebenfalls denkbar.Selbstverständlich kann diese Aktivkohle auch zur Verbrennung geschickt werden.

Die nach der Trennung erhaltene klare, saure Lösung beinhaltet neben Mangan-II-chlorid auch noch andere Chloride, wie Eisen-II-chlorid und Cadmiun-II-chlorid, sowie Quecksilberverbindungen.

Im Folgenden wird auf die Zusammensetzung der Manganverbindungen, die sowohl während der Batterieentladung, als auch vor allem nach dem Schreddern beim Auflösen des Zinkes infolge der Reduktionsreaktionen entstanden sind, näher eingegangen. Formelmäßig können die elektrochemische Reaktion in Zellen, bei der die chemische Energie als elektrische Energie frei wird, und die beim Auflösen des Zinkes in alkalischem Bereich, bei der chemische Energie als Wärme frei wird, folgendermaßen zusammengefaßt werden:

Zn + 2 MnO₂ + 2 H₂O - Zn (OH)₂ + 2 MnOOH

Bei den beiden Anordnungen geht Braunstein letzten Endes in, im alkalischen Bereich unlösliches, niederes Manganoxid über. Diese Oxide sind, im Gegenteil zum Braunstein, wie die Analyse der alkalischen Zinkatlösung gezeigt hat, im alkalischen Bereich praktisch nicht löslich.

Eine Trennung von Mangan-II-chlorid als Braunstein im sauren Bereich kann neben anderen Schwermetallionen elektro-chemisch nach der PS-CH 548 953 oder manganometrisch nach A. George (Ann. Chim. phys. [3]66 [1862]153/61, 159/60) erfolgen.

Die Reaktion verläuft manganometrisch nach der Bruttogleichung:

3 Mn⁺ + 2 MnO₄ ⁻+ 2 H₂O - 5 MnO₂ + 4 H⁺

Aus einem Teil des nach diesem Verfahren erhaltenen Braunsteins kann durch Verschmelzen mit einer ungefähr stöchiometrischen Menge KOH unter Einfluß von Sauerstoff das für die obige Reaktion notwendige Kaliumpermanganat hergestellt werden. (W. Baronius, G. Marcy (Chem. Tech. [Leipzig]) A8 [1966] 723/7).

In den meist sofort ausgefallenen Braunstein wird leicht Mn^{II} eingebaut, das nur schwer zu oxidieren ist. Aus diesem Grund liegt der formale Oxidationsgrad x der MnOₓ-Phase inner innerhalb "zwei". Die Werte von x hängen stark von der Darstellungsbedingungen ab. Bei einem pH-Wert von 2 und einer geringen Temperaturerhöhung auf 40°C wird eine Annäherung an den theoretischen Wert 2 bewirkt.
A. Guyard (Chem. News 8 [1863]292/3; Bull. soc. chim. France [2]1 [1864] 89/95, 89/91)

Braunstein wird abfiltriert und zweimal mit Wasser ausgewaschen. Nach der Entfernung der Fremdionen durch Waschen kann der pH-Wert der Waschwässer mit Natronlauge auf 7 eingestellt werden. Das so hergestellte Mangandioxid kann in Trockenbatterien als Kathodendepolarisator eingesetzt werden oder der chemischen Industrie zugeführt werden.

Die nach dem Abfiltrieren des Braunsteins erhaltene saure Lösung wird mit Natronlauge auf einen für die weitere Sulfidbehandlung geeigneten pH-Wert gebracht. Die ausgefallenen Sulfide, darunter Quecksilbersulfid, werden nach der Verfestigung deponiert.

Eine Quecksilberkontaminierung des Zinkhydroxids und des Braunsteins wurde nicht festgestellt. Quecksilberverbindungen wurden ausschließlich in der sauren Lösung nach der Braunsteinfällung festgestellt, welche letztendlich als Sulfid gefällt wurden.

Bei der Wiedergewinnung von Zink und Mangan aus Altbatterien sind diese zwei ausgewählten Methoden Element-spezifisch und können keine anderen in Trockenbatterien vorkommenden Elemente an den Reaktionen beteiligen. Durch bereits bekannte, geeignete Reaktionsedingungen kann eine Mischkristallbildung bei der Fällung fast vollständig unterdrückt werden.

Es wurden bei diesem, auf naßchemischen Schritten beruhenden Verfahren zur Verwertung der Altbatterien im Gegensatz zu bereits bekannten, thermischen Verfahren Reaktionen und Schritte ausgewählt, die keine Temperaturerhöhung benötigen. Es muß demnach lediglich auf die Arbeitsplatzbelastung und die Emissionen geachtet werden. Zu diesem Zweck findet die mechanische Zerkleinerung und das Sieben in einem abgeschlossenen System statt und die Abluft wird über eine Filteranlage und zum Schluß über eine mit Jod und Schwefel dotierte Aktivkohle gereinigt. Durch diese Filteranlage ist die Abluft frei von freien Partikeln, sowie von jeglichen, flüchtigen Batteriebestandteilen. Das Auflösen des Schlammes nach der Zinktrennung wird ebenfalls in einem abgeschlossenen System durchgeführt, wobei die Abluft über eine, wie oben beschriebene, Abluftreinigungsanlage geleitet wird.

## Patentansprüche

1. Verfahren zur Aufbereitung von Altbatterien, insbesondere von Zink-Kohle- und Alkali-Mangan-Batterien, zur Wiedergewinnung darin vorhandener verwertbarer oder umweltrelevanter Stoffe, welches das mechanische Zerkleinern des Einsatzmaterials, eine Auftrennung des so erhaltenen Batterieschrotts in eine Feinfraktion und in eine gröbere Fraktion, wobei die gröbere Fraktion weiter in einen magnetischen und in einen nicht-magnetischen Anteil aufgetrennt wird, und daran anschließend erfolgende überwiegend naßchemische Schritte zur Auftrennung der die einzelnen verwertbaren oder umweltrelevanten Stoffe enthaltenden Fraktionen sowie zu deren Abtrennung umfaßt, dadurch gekennzeichnet, daß das nach der Abtrennung von Ammoniumchlorid und von gegebenenfalls vorhandenen wasserunlöslichen Materialien mit einer niedrigeren Dichte als Wasser durch getrenntes Suspendieren der Feinfraktion sowie des nicht-magnetischen Anteiles in Wasser, Einstellen des pH-Wertes der so erhaltenen Suspensionen auf über 12, Abführen des freigesetzten Ammoniaks und Filtrieren der Suspensionen zur Gewinnung der genannten wasserunlöslichen Materialien in gelöster Form vorhandene Zink durch Fällung nach Einstellung des pH-Wertes auf 11 und Abfiltrieren des erhaltenen zinkhältigen Niederschlages abgetrennt wird.

2. Verfahren nach Anspruch 1, dadurch gekennzeichnet, daß die Abtrennung von Aktivkonle nach Ansäuern des beim Filtrieren der Suspensionen erhaltenen Rückstandes auf einen pH-Wert von 1 duren Filtration erfolgt.

3. Verfahren nach Anspruch 2, dadurch gekennzeichnet, daß die Abtrennung des im Filtrat, welches nach Abtrennung der Aktivkohle erhalten wird, in gelöster Form vorhandenen Mangans durch Elektrolyse oder manganometrisch erfolgt.

4. Verfahren nach Anspruch 3, dadurch gekennzeichnet, daß die Abtrennung darüberhinaus vorhandener Verbindungen, wie beispielsweise von Quecksilberverbindungen, durch Alkalisch-Stellen des Filtrates, welches nach Abtrennung des Mangans erhalten wird, und eine anschließende Sulfidfällung erfolgt.

5. Verfahren nach einem der Ansprüche 1 bis 4, dadurch gekennzeichnet, daß die nach einem der vorstehenden Ansprüche abgetrennten Stoffe in geeigneter Weise weiter behandelt werden, um sie einer Wiederverwertung und/oder einer Deponierung zuführen zu können.

6. Verfahren nach einem der Ansprüche 1 bis 5, dadurch gekennzeichnet, daß die einzelnen Schritte des Verfahrens unter oder bei Raumtemperatur oder bei der durch die jeweilige Reaktion hervorgerufenen Temperatur ohne zusätzliches Erhitzen erfolgen.

## Claims

1. Method of processing used batteries, particularly zinc-carbon and alkali-manganese batteries, in order to recover usable or environmentally relevant substances contained therein, which method includes mechanical reduction of the application material, a separation of the thus-obtained battery granulate into a fine fraction and into a coarser fraction, wherein the coarser fraction is further separated into a magnetic part and a non-magnetic part, the method further comprising subsequent, predominantly wetchemical steps to separate the fractions that contain the individual usable or environmentally relevant substances, as well as their separation, characterized in that the zinc present in dissolved form after separation of ammonium chloride and, possibly, water-insoluble materials having a lower density than water by means of separate suspension of the fine fraction and the non-magnetic part in water, setting of the pH value of the thus-obtained suspension above 12, removal of the released ammonium and filtration of the suspension for obtaining said water-insoluble materials is separated out by means of precipitation after setting of the pH value to 11 and filtering off of the obtained, zinc-containing precipitate.

2. Method as defined in claim 1, wherein the separation of active carbon after acidification of the residue obtained during filtration of the suspensions is effected by means of filtration at a pH value of 1.

3. Method as defined in claim 2, wherein the separation of the manganese present in dissolved form in the filtrate obtained after separation of the active carbon is effected by means of electrolysis, or manganometrically.

4. Method as defined in claim 3, wherein the separation of other compounds present, for example mercury compounds, is effected by means of alkaline setting of the filtrate obtained after separation of the manganese, and subsequent sulfide precipitation.

5. Method as defined in any of claims 1 to 4, wherein the materials separated off according to one of the foregoing claims are further treated in a suitable manner so that they can be supplied to further processing and/or a dump.

6. Method as defined in any of claims 1 to 5, wherein the individual steps of the method are performed below or at ambient temperature, or at the temperature caused by the respective reaction, without additional heating.

## Revendications

1. Procédé de traitement de batteries usagées, en particulier de batteries zinc-carbone et de batteries métal alcalin-manganèse, pour la récupération de matériaux réutilisables ou nuisibles à l'environnement présents comprenant les étapes consistant à soumettre le matériau mis en oeuvre à un broyage mécanique, à séparer les débris de batterie ainsi obtenus en une fraction fine et une fraction plus grossière, la fraction plus grossière étant encore divisée en une partie magnétique et une partie non magnétique, et les étapes subséquentes, effectuées essentiellement par voie chimique humide, pour la décomposition des fractions contenant les différentes matières réutilisables ou nocives à l'environnement, ainsi que pour leur séparation, caractérisé par le fait qu'après la séparation du chlorure d'ammonium et des substances insolubles dans l'eau éventuellement présentes, ayant une densité inférieure à celle de l'eau, par mise en suspension séparée de la fraction fine ainsi que de la partie non magnétique dans l'eau, réglage du pH de la suspension ainsi obtenue à une valeur supérieure à 12, élimination de l'ammoniac libéré et filtration de la suspension pour l'obtention desdites substances insolubles dans l'eau, le zinc présent sous forme dissoute est séparé par précipitation, après réglage du pH à 11 et séparation par filtration du précipité obtenu, contenant le zinc.

2. Procédé selon la revendication 1, caractérisé par le fait que la séparation du charbon actif, après acidification à pH=1 du résidu obtenu par filtration de la suspension, est réalisée par filtration.

3. Procédé selon la revendication 2, caractérisé par le fait que la séparation du manganèse présent sous forme dissoute dans le filtrat obtenu après séparation du charbon actif est effectuée par électrolyse ou par manganométrie.

4. Procédé selon la revendication 3, caractérisé par le fait que la séparation des autres composés présents, tels que par exemple les composés du mercure, est effectuée par alcalinisation du filtrat qui a été obtenu après séparation du manganèse, et précipitation subséquente des sulfures.

5. Procédé selon l'une quelconque des revendications 1 à 4, caractérisé par le fait que les substances séparées selon l'une quelconque des revendications précédentes sont soumises à un traitement ultérieur approprié afin d'être amenées à une réutilisation et/ou un dépôt.

6. Procédé selon l'une quelconque des revendications 1 à 5, caractérisé par le fait que les différentes étapes du procédé sont réalisées à une température inférieure à la température ambiante ou à la température ambiante, ou à la température provoquée par les différentes réactions sans chauffage supplémentaire.
